# EUROPÄISCHE PATENTSCHRIFT

(11) **EP 1 753 113 B1**
(45) Veröffentlichungstag und Bekanntmachung des Hinweises auf die Patenterteilung: **10.10.2012**
(21) Anmeldenummer: 06450113.3
(22) Anmeldetag: 10.08.2006
(51) Int. Cl.: H02K 1/04, H02K 15/10

(54) **Statorverguss**
Stator molding
Enrobage de stator

(30) Priorität: 11.08.2005 AT 13512005
(43) Veröffentlichungstag der Anmeldung: 14.02.2007
(73) Patentinhaber: Ott, Josef, 8753 Fohnsdorf (AT)
(72) Erfinder: Ott, Josef, 8753 Fohnsdorf (AT)
(74) Vertreter: Beer, Manfred

(56) Entgegenhaltungen:
- EP-A- 1 228 737
- EP-A1- 0 707 043
- WO-A-97/45917
- WO-A-03/052906
- WO-A1-00/33446
- DE-A1- 10 033 577
- DE-A1- 19 714 466
- JP-A- 2002 136 034

## Beschreibung

Die Erfindung betrifft einen Elektromotor, insbesondere Kleinst-Elektromotor, mit einer Rotoreinheit, einem Innenbereich für die Rotoreinheit, einem die Rotoreinheit umgebenden Statorpaket mit einer aus Spulenelementen gebildeten Statorwicklung, Elektronikkomponenten zur Steuerung des Elektromotors und einer wenigstens Teilbereiche des Elektromotors umgebenen Beschichtung, wobei die mittels eines Spritzguss- oder Spritzpressverfahrens aufgebrachte Beschichtung aus duroplastischem Werkstoff sich im Wesentlichen über die Länge des Elektromotors erstreckt und wenigstens die Spulenelemente und die Elektronikkomponenten wenigstens teilweise sterilisationsfest umhüllt.

Des Weiteren betrifft die Erfindung ein Verfahren zum Beschichten von Elektromotoren, mit einem Innenbereich für eine Rotoreinheit, bei dem ein Statorpaket mit einer durch Spulenelemente gebildeten Statorwicklung wenigstens teilweise mit duroplastischem Werkstoff umhüllt wird, wobei der duroplastische Werkstoff mit einem Spritzguss- oder Spritzpressverfahren in Form einer Beschichtung, die sich im wesentlichen über die Länge des Elektromotors erstreckt, wenigstens bereichsweise um das Statorpaket mit den Spulenelementen und Elektronikkomponenten zur Steuerung des Elektromotors angebracht wird.

Elektromotoren aus der Medizintechnik sind unter anderem aus der WO 00/33446, der WO 03/0522906, der JP 2002 136 034, der EP 0 707 043, der WO 97/45917, der DE 197 14 466 und der DE 100 33 577 bekannt.

Elektromotoren für die Medizin- und Dentaltechnik, auf welche sich diese Erfindung besonders bezieht, und die an sich aus dem Stand der Technik bekannt sind, sind aufgrund ihrer besonderen Einsatzbedingungen mit einer speziellen Isolation auszuführen. Bekannt ist, dass die Isolation der Wicklung eines Stators mit Tränk-Imprägnierharzen oder mit sogenannten Backlackdrähten erfolgt. Eine hinsichtlich der Resistenz gegenüber bestimmten Medien zusätzlich notwendige Isolation erfolgt durch Vergießen des Stators mit Vergussharzen. In der Regel sind das Zwei-Komponentenharze, die eventuell Füllstoffe aufweisen.

Auf Grund der erforderlichen Qualität muss das Vergießen unter Vakuum oder Druck mit anschließender Wärmetrocknung erfolgen, was zeit- und kostenintensiv ist. Zudem sind diese Vergussmassen oder Harze im Ausgangszustand relativ umweltbelastend, weshalb beim Verarbeiten besondere Vorsicht erforderlich ist.

Weiters ist es bekannt, bewickelte Statoren im Spritzgussverfahren mit Thermoplasten zu umspritzen. Dies ist jedoch wegen der begrenzten Temperaturbeständigkeit des Kupferlackdrahtes der Wicklung nur mit Stoffen möglich, die eine relativ geringe Schmelz- bzw. Spritztemperatur aufweisen. Die dafür in Frage kommenden Stoffe haben allerdings den Nachteil, dass sie der dauernden Temperatur- und Medienbelastung im Bereich der Medizin- und Dentaltechnik nicht widerstehen. Speziell aber für solche Anwendungen, bei denen die Motoren vielfacher Sterilisation unterzogen werden müssen, ist der Einsatz von Thermoplasten im Spritzgussverfahren ohne zusätzliche Schutzmaßnahmen für die Wicklung und für eine eventuell zu integrierende Elektronik nicht anwendbar.

Daher werden Motoren für diese Einsatzgebiete, wie oben beschrieben, mit widerstandsfähigen Harzen unter Vakuum oder Druck vergossen. Zusätzlich in solche Motoren eingebaute Elektronikkomponenten, wie z.B. eine Sensorelektronik, müssen anschließend eigens mit einer geeigneten Vergussmasse vergossen werden.

Der Erfindung liegt daher die Aufgabe zugrunde, Elektromotoren, wie sie in der Medizin- und Dentaltechnik zur Anwendung kommen, mit einer Beschichtung zur Verfügung zu stellen, deren Eigenschaften und Aufbringung die oben beschriebenen Nachteile so weit wie möglich ausschließt.

Gelöst wird diese Aufgabe erfindungsgemäß mit einem Elektromotor mit den Merkmalen des Anspruches 1.

Des Weiteren wird die Aufgabe erfindungsgemäß gelöst mit einem Verfahren mit den Merkmalen des Anspruches 13.

Ein besonderer Vorteil des erfindungsgemäßen Elektromotors und des erfindungsgemäß Verfahrens zu dessen Isolierung mit duroplastischem Werkstoff besteht darin, dass beim hermetisch dichten Umhüllen des Stators mit der Wicklung auch die elektronischen Komponenten für die Steuerung des Motors aus Standardkomponenten hergestellt sein können und ohne Qualitäts- oder Lebensdauereinbußen mit eingegossen werden können. Dadurch ist der Elektromotor mit dem Isolierstoffgehäuse so konstruiert, dass er sterilisationsfest ist und für Desinfektionsbehandlungen mit Alkohol oder weiteren zur Reinigung verwendeten Chemikalien und/oder Gasen entspricht. Die Grundkonstruktion des Elektromotors zeichnet sich zudem durch geringe äußere Abmessungen und geringem Gewicht aus.

Durch das erfindungsgemäße Herstellungsverfahren ist es trotz kleinem Bauvolumen auch möglich, Hohlräume im Isolierstoffkörper zur Leitungsführung, insbesondere von Fluiden oder Gasen, auszubilden. Diese Hohlräume können zum Durchleiten von Kühlmedien durch den Stator genutzt werden, zur Führung von Transportleitungen für z.B. Luft, Wasser, Öl oder Desinfektionsmittel, aber auch für Versorgungsleitungen für z.B. in der Dental- und Medizintechnik notwendiges Licht, ohne dass zusätzliche Rohrleitungen außerhalb des Elektromotors oder durch den Stator geführt werden müssen.

Bevorzugte und vorteilhafte Ausführungsformen des erfindungsgemäßen Elektromotors einerseits, und des erfindungsgemäßen Verfahrens andererseits, sind Gegenstand der übrigen Unteransprüche.

weitere Einzelheiten, Merkmale undworteile des erfindungsgemäßen Elektromotors und des erfindungsgemäßen Verfahrens ergeben sich aus der nachstehenden Beschreibung unter Bezugnahme auf die angeschlossenen Zeichnungen, in welchen bevorzugte Ausführungsformen dargestellt sind.

Es zeigt:
Fig. 1 eine schematische Darstellung eines beschichteten Statorpaketes eines erfindungsgemäßen Elektromotors im Achsschnitt,
Fig, 2 eine schematische Darstellung der Beschichtung des Statorpaketes aus Fig. 1,
Fig. 3 eine Achs-Ansicht des beschichteten Statorpaketes aus Fig. 1,
Fig. 4 eine schematische Darstellung einer Rotoreinheit im Achsschnitt mit einseitiger Rotorlagerung,
Fig. 5 eine erste Ausführungsform eines Rotormagneten,
Fig. 6 eine zweite Ausführungsform eines Rotormagneten,
Fig. 7 eine schematische Darstellung einer Rotoreinheit im Achsschnitt mit doppelseitiger Rotorlagerung,
Fig. 8 eine schematische Darstellung eines Stators eines erfindungsgemäßen Elektromotors im Achsschnitt mit einer Wicklung und angebauter Sensorelektronik,
Fig. 9 und 10 schematische Darstellungen eines Stators eines nicht von der Erfindung umfassten Elektromotors im Achsschnitt mit einer Wicklung und angebauter Sensorelektronik,
Fig. 11 eine schematische Darstellung eines nicht von der Erfindung umfassten Elektromotors mit einem Gehäuse und eingebautem Rotor,
Fig. 12 eine schematische Darstellung eines Stators eines nicht von der Erfindung umfassten Elektromotors im Achsschnitt mit einer Wicklung und angebauter Sensor- und Leistungselektronik,
Fig. 13 eine Achs-Ansicht der Statorbeschichtung mit einem Lampensockel und
Fig. 14 einen Einlegeteil in Draufsicht.

Der Grundaufbau des erfindungsgemäßen Elektromotors 1 besteht aus einer Rotoreinheit 2, einem Statorpaket 3 (Kern) und einem Gehäuse 4.

Die Rotoreinheit 2 kann Permanentmagnete 5 mit verschiedenen Polaritäten besitzen, die jeweils paarweise um eine Rotorwelle 6 angeordnet sind. Zur Bestimmung und Steuerung eines zu erzeugenden Drehfeldes sind einerseits magnetelektrische Wandlerelemente 7 (Sensoren, Sensormagnet) stirnseitig anbeordnet. Andererseits können leitfähige Schichten an den außenflächen der Permanentmagnete 5 aufgebracht sein, die den Selbstlauf der Rotorexnheit 2 ermöglichten. Der Außenumfang des Rotors ist abgedeckt, korrosiv geschützt und drehbar in einem im Radialabstand umgebenden Stator gelagert.

Im Statorpaket 3 (Kern) sind Spulenelemente 8 eingebaut und so angeordnet, dass sie ein Magnetfeld erregen. Das Statorpaket 3 besteht aus ringartigen, dünnen Blechen und ist gegen die Spulenelemente 8 elektrisch isoliert.

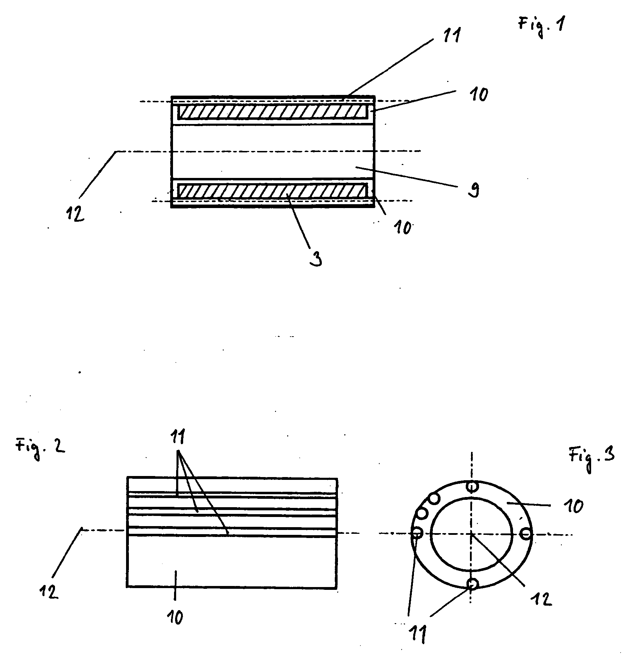

Fig. 1 zeigt einen Stator eines erfindungsgemäßen Elektromotors 1 mit einem Innenbereich 9 für die Rotoreinheit 2. Die zum Herstellen des Statorpakets 3 notwendigen dünnen Bleche, sogenannte Dynamobleche, sind ringförmig und ohne ausgeprägte Nuten. Von einem dünnwandigen Blechband werden Blechringe ausgestanzt und zu einem Statorpaket 3 verdichtet (sog. "Paketieren"). Je nach Technologie des Paketierens werden dazu Klammern, Nieten oder Kleber verwendet.

Zum Schutz gegen negative Sterilisationseinflüsse oder Korrosion wird das ringförmige Statorpaket 3 mit einem spritzfähigen, aushärtendem Werkstoff, der speziell auf die hohen Sterilisationsbedingungen beim medizintechnischen oder dentalmedizinischen Einsatz abgestimmt ist, umhüllt bzw. beschichtet. Erfindungsgemäß wird diese Beschichtung 10 durch ein spezielles Spritzverfahren aus duroplastischem werkstoff hergestellt.

Die für die Erfindung besonders relevanten Eigenschaften von duroplastischen Werkstoffen sind z.B. die Temperaturstabilität, die nach dem Aushärten weit über die verarbeitungstemperatur hinausgeht, die Hydrolysebeständigkeit, der Wärmeausdehnungskoeffizient, die mechanische Stabilität, die Wärmeleitfähigkeit und das Isoliervermögen. Bei dem erfindungsgemäßen Verfahren erfolgt das Beschichten des Elektromotors 1 durch Aufbringen einer dünnen Beschichtung 10 aus duroplastischem Werkstoff, das entsprechende Widerstandsfähigkeit gegen die in der Medizin- und Dental-Technik auftretenden Temperaturen und korrosionsbildenden Medien aufweist. Das Aufbringungsverfahren mit im Vergleich zu vergussharz sehr kurzen Aushärtezeiten im Formwerkzeug ist günstig sowie umwelt- und mitarbeiterschonend.

Weiterhin erfolgt gemäß der Erfindung das Paketieren und das Beschichten der Außen- und/oder Innenflächen des Statorpaketes 3, sowie dessen Stirnflächen., in einem Arbeitsgang und mit der homogenen Schicht. Die Beschichtung 10 kann dabei die volle Oberfläche des Statorpaketes 3 oder nur Teile davon betreffen. Das Statorpaket 3 kann je nach Erfordernis sowohl mit und ohne ausgeprägte Nuten ausgeführt sein.

In Fig. 2 ist eine erfindungsgemäße Beschichtung 10 für das Statorpaket 3 aus Fig. 1 gezeigt. Diese Beschichtung 10 aus duroplastischem Werkstoff liegt am äußeren Umfang des Statorpaketes 3 an und weist mehrere Kanäle 11 zur Aufnahme insbesondere von Fluiden oder Gas auf. Die Kanäle 11 sind in der Beschichtung 10 integriert und erstrecken sich axial und-bilden eine direkte Verbindung der beiden stirnseitigen Enden.

Fig. 3 zeigt eine Achs-Ansicht auf eine Stirnseite des beschichteten Statorpaketes 3 aus Fig. 1 und verdeutlicht, wie die Kanäle 11 um den Umfang des Statorpaketes 3 an dessen Außenfläche angeordnet sein können. Die Beschichtung 10 kann an der Stirnseite eine ringförmige Außenfläche bilden.

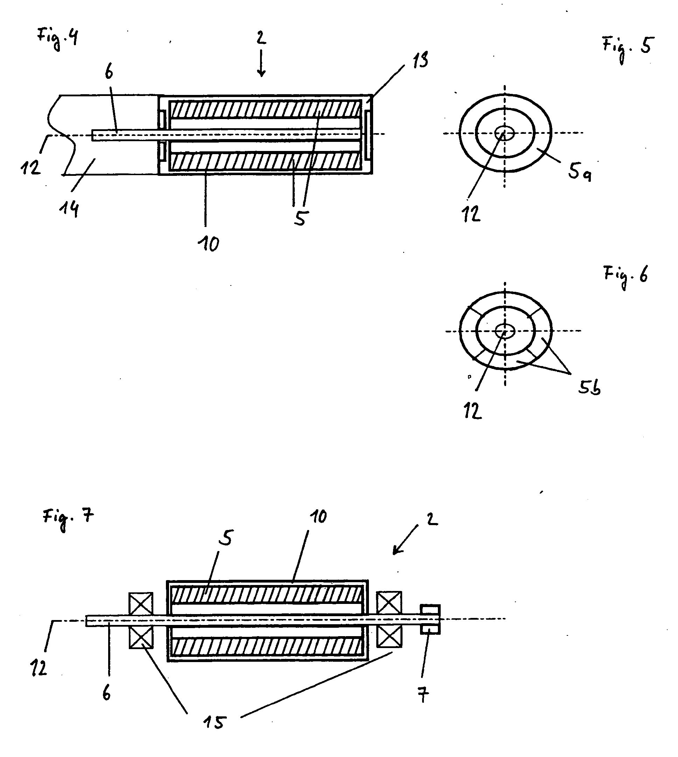

Der Rotor in Fig. 4 ist mit einem aus Permanentmagneten 5 ausgeprägtem Polsystem ausgestattet. Erfindungsgemäß kann die Rotoreinheit 2 wie in Fig. 5 aus einem Rundmagnet 5a bestehen oder wie in Fig. 6 aus einzelnen Magnetsegmenten 5b aufgebaut sein. Zur Übertragung einer Drehbewegung an ein zu bewegendes Element oder Vorrichtung dient die Rotorwelle 6, mit der das Polsystem aus Permanentmagneten 5 fest verbunden ist. Die Rotatiosnachse 12 verläuft dabei durch das Magnetsystem.

Zum Schutz gegen negative Sterilisationseinflüsse oder Korrosion wird die Rotoreinheit 2 mit einem spritzfähigen, aushärtenden Werkstoff, insbesondere hochverdichtendem, duroplastischem Werkstoff, der speziell auf die hohen Sterilisationsbedingungen abgestimmt ist hermetisch umhüllt bzw. beschichtet. Die Beschichtung 10 kann dabei die volle Oberfläche der Rotoreinheit 2 oder nur Teile davon betreffen. Wenn die duroplastische Beschichtung 10 über die gesamten Außenflächen der Rotoreinheit 2 reicht, schützt sie damit alle korrosiv empfindlichen Teile, d.h. die zwei Stirnfläche und die Flache des Außenumfangs.

Bei hochwertigen bzw. bei hohen Drehzahlen laufenden Elektromotoren 1 besteht auf Grund von Ungenauigkeiten beim Herstellungsprozess die Notwendigkeit, den Rotor zu wuchten. Dies erfolgt in der Regel durch Entfernen von Material am Rotorumfang. Bei Rotoreinheiten mit aufgeklebten Magneten, oder wenn der Rotormagnet aus einem gepressten Zylinder besteht, sind Wuchtbohrungen an den Magneten nicht möglich. Bei diesen Ausführungen ist es üblich, dass stirnseitig genügend Wellenmaterial verfügbar bleibt, das abgetragen werden kann, oder dass Wuchtscheiben zum Anbringen der Wuchtbohrungen angeordnet werden. Erfindungsgemäß kann nun die duroplastische Beschichtung 10 an den Stirnseiten so gestaltet sein, dass sie durch einen möglichen. Materialabtrag in den Bereichen 13 das Wuchten, d.h. einen dynamischen Ausgleich, der Motoreinheit 2 ermöglicht.

Obwohl die Erfindung anhand einer Rotoreinheit 2 mit Permanentmagneten 5 beschrieben ist, ist das Einsatzgebiet der Erfindung nicht darauf beschränkt, sondern ist ebenfalls z.B. für Rotoreinheiten für Asynchronmotorläufer anwendbar.

In der dargestellten Ausführungsform in Fig. 4 ist die Rotoreinheit 2 einseitig gelagert. An der Abtriebsseite des Elektromotors, in Fig. 4 die linke Seite, ist dazu ein Kopplungsteil 14 mit einer entsprechenden Lagerung an die Rotoreinheit 2 gekuppelt.

Fig. 7 zeigt eine Ausführungsform der Rotoreinheit 2 mit doppelseitiger Lagerung und einem zusätzlichem Wandlerelement (Sensormagnet) 7. Der grundsätzliche Aufbau von Rotormagneten 5, 5a, 5b und Beschichtung 10 entspricht im Wesentlichen dem Aufbau aus Fig. 4. Doppelseitige Lagerung bedeutet, dass zur Lagerung der Rotoreinheit 2, bzw. der Rotorwelle 6, zu beiden Stirnseiten beabstandete Lager 15, insbesondere Kugellager, der Rotorwelle 6 zugeordnet sind. Das Wandlerelement (Sensormagnet) 7 zur Bestimmung und Steuerung des Drehfelder ist an der der Versorgungsseite gegenüberliegenden Seite der Rotoreinheit 2 an der Rotorwelle 6 angeordnet.

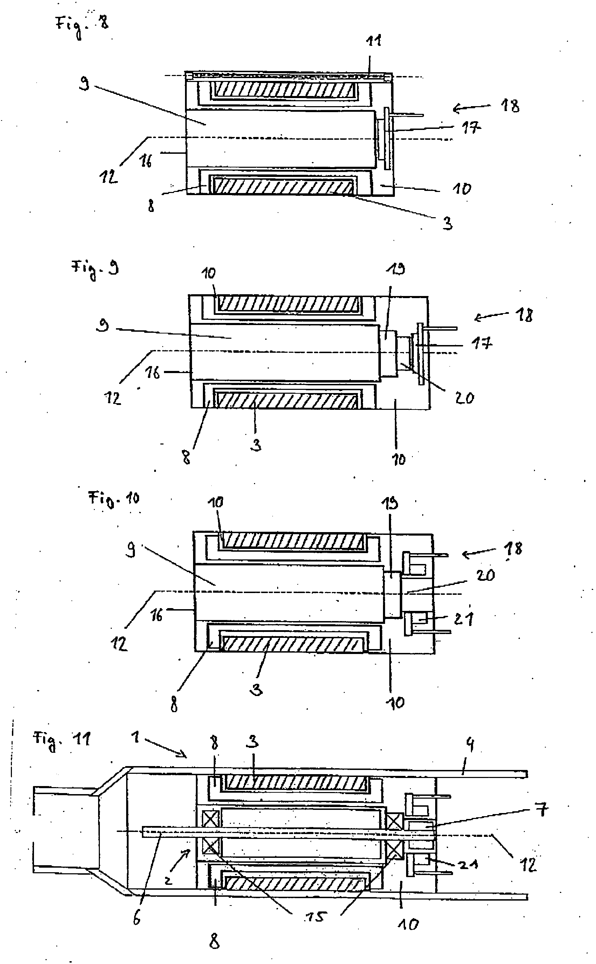

Die in Fig. 8 dargestellte Ausführungsform gibt einen Elektromotor 1 mit einer einseitigen Rotorlagerung wieder. Einseitig bedeutet, dass zur Lagerung der Rotoreinheit, 2, bzw. dessen Rotorwelle 6, nur ein Lager 15, in diesem Fall im Bereich der Öffnung 16 des Innenbereichs 9, vorgesehen ist. Die dieser "offenen" Stirnseite des Elektromotors 1 gegenüberliegende Stirnseite (in Fig. 8 rechts) wird im Weiteren als Versorgungsseite bezeichnet. Die Versorgungsseite kann, wie hier abgebildet, geschlossen sein, kann aber ebenfalls offen sein.

Das Statorpaket 3 ist mit einer elektrischen Wicklung, die durch die Spulenelemente 8 gebildet ist, ausgestattet. Diese Spulenelemente 8 sind so geformt, dass die Wicklungsdrähte im Innenbereich 9 des Statorpakets 3 dicht am beschichteten Blechpaket anliegen. Die aus dem Statorpaket 3 auf beiden Seiten stirnseitig herausragenden Spulenelemente 8 sind zu einem Wickelkopf ausgebildet. Die Anzahl von Spulenelementen 8, sowie die Wickellage der Spulenelemente 8 im Stator und deren Verschaltung, ist von der Polzahl des Elektromotors 1 abhängig.

Eine Platine 17 mitsamt allen Elektronikkomponenten 18, wie z.B. eine Sensorik, ist strinseitig am Wickelkopf des Stators positioniert. Wie bereits angesprochen mussten diese Elektronikkomponenten 18 bisher getrennt vom Stator mit speziellen Harzen vergossen werden. Erfindungsgemäß ist nun nicht nur das Statorpaket 3 mit einer Beschichtung 10 umhüllt, sondern auch die durch die Spulenelemente 8 gebildete Statorwicklung und die Elektronikkomponenten 18.

Im Gegensatz zu Thermoplasten liegt die Verarbeitungstemperatur von Duroplasten in Temperaturbereichen (ca. 150 bis 200°C), die sowohl für den Kupferlackdraht der Spulenelemente 8, als auch für die Elektronikkomponenten 18 verträglich ist. Durch die gute Wärmeleitfähigkeit des duroplastischen Werkstoffes ist zudem eine vorteilhafte Wärmeabfuhr von der Elektronik gegeben.

Um den in der Statorwicklung begrenzt vorhandenen Raum möglichst vollständig ausnützen zu können, bzw. das volumen der Beschichtung 10 möglichst gering zu halten, ist es notwendig, die Beschichtung 10 so dünn wie möglich auszuführen. Da die Schichtdicken idealerweise in Bereichen liegen, die mit üblichen, thermoplastischen Werkstoffen im Spritzgussverfahren nicht zuverlässig aufgebracht werden können, war das Aufbringen bisher mit großem Aufwand verbunden. Bei dem erfindungsgemäßen Einsatz von duroplastischem Werkstoff erfolgt daher sowohl eine vollständige Ummantelung des Elektromotors 1 inklusive der Elektronikkomponenten 18 mit erheblichen wirtschaftlichen Vorteilen.

Der Stator in Fig. 9 ist ebenfalls eine versorgungsseitig geschlossene Ausführungsform, die im Wesentlichen ähnlich gestaltet ist, wie der Stator in Fig. 8. Die Unterschiede liegen zum einen darin, dass hier kein Kanal 11 nahe am Außenumfang der Beschichtung 10 gezeigt sind. Zum anderen ist hier eine doppelseitige Rotorlagerung möglich, da versorgungsseitig ein Lagersitz 19 im Inneren der Beschichtung 10 ausgebildet ist.

Zwischen dem Lagersitz 19 und den Elektronikkomponenten 18 ist in diesem Ausführungsbeispiel noch ein Freiraum 20 für das an der Rotorwelle 6 befestigte Wandlerelement (Sensormagnet) 7 vorhanden.

Fig. 10 zeigt eine weitere Variante des Stators mit einseitiger Rotorlagerung. Der Grundaufbau von Statorpaket 3, Spulenelementen 8 und Anordnung der Beschichtung 10 entspricht im Wesentlichen der Ausführung aus Fig. 9. Die einseitige Lagerung entspricht der Rotorlagerung aus Fig. 11, wobei an einer Stirnseite des Stators eine Lagerbohrung ausgebildet ist. An der versorgungsseiten Stirnseite befindet sich in der Beschichtung 10 wieder ein Freiraum 20, der sich parallel zur Rotationsachse 12 erstreckt und den Sensormagneten 7 aufnimmt. Der Sensormagnet 7 ist in diesem Beispiel einer Sensorelektronik 21 zugeordnet.

Die Platine 17 mitsamt allen Elektronikkomponenten 18, wie z.B. die Sensorelektronik 21, ist strinseitig am Wickelkopf des Stators positioniert. Die Spulenanschlüsse sind einseitig am Wickelkopf ausgeführt und über die Sensorelektronik 21 mit den Leistungskontakten verbunden. Der elektrische Anschluss zu einer Versorgungseinheit erfolgt über die Leistungskontakte zu einem beweglichen Kabel.

In Fig. 11 ist der erfindungsgemäße Elektromotor 1 (doppelseitig gelagert) schematisch in seinem zusammengebauten Zustand in einem Gehäuse 4 gezeigt. Das Gehäuse 4 kann z.B. im Bereich der Dental-Technik in einem Handstück eingebaut sein.

Ersichtlich ist hier die Einbauposition der Rotoreinheit 2 sowie der Rotorwelle 6. Auf der linken Seite treibt die Rotorwelle 6 über den Kupplungsteil 14 (vgl. Fig. 4) z.B. einen entsprechenden Bohraufsatz an. Von der Versorgungsseite kommend können innerhalb des Gehäuses 4 entsprechende Leitungen in die Kanäle 11 verlaufen und in der Beschichtung 10 durch das Statorpaket 3 durchgeführt werden.

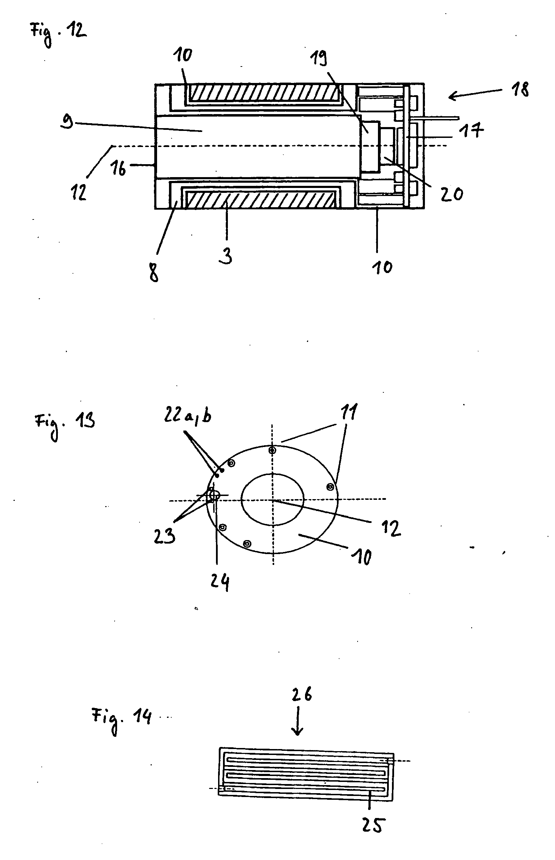

Wie in Fig. 12 gezeigt, können die integrierten und ummantelten Elektronikkomponenten 18 zusätzlich zur Sensorik auch die Steuer - und Leistungselektronik für den Elektromotor 1 beinhalten. Damit kann die Drehzahl des Elektromotors 1, wie bei einem Kollektormotor, durch Verändern der Versorgungsspannung über zwei Anschlussdrähte geregelt werden.

Der bewickelte Stator einschließlich der Elektronikkomponenten 18 wird in einem mehrteiligem Spritzwerkzeug gespannt und mit der duroplastischen Beschichtung 10 ausgestattet. Alle erforderlichen Elektronikkomponenten 18 zur Kommutierung, Drehzahl-, Drehmomentregelung, etc. sind damit kompakt und sterilisationsfest im Elektromotor 1 integriert.

In Fig. 13 ist ersichtlich, dass der Elektromotor zur Eigenkühlung und Förderung von Fluiden und Gasen spezielle Kanäle 11 als Leitungssysteme hat und mit Leitungsdrähten 22a oder Lichtleitern 22b ausgestattet sein kann. Diese Leitungssysteme 11, 22a, 22b sind jeweils in axialer Richtung am Außenumfang des Statorpakets 3 verteilt und fallweise auch zwischen dem Rotor und dem Stator angeordnet. Erfindungsgemäß werden die axial verlaufenden Kanäle 11 in die Ummantelung des Statormantels eingebettet bzw. mit duroplastischem Werkstoff umspritzt.

Zwei elektrische Leiter 23 die z.B. zu einer Miniaturlampe, z. B. auch LED führen können sind analog den Leitungssystemen 11, 2a, 22b verlegt und enden in einem Aufnahmesockel 24 der Lampe. In einer weiteren Ausführungsform können statt der elektrischen Leiter 23 und der Lampe Lichtleiter 22b, wie z.B. Glasfaserstäbe, eingegossen bzw. in einen dafür vorgesehene Kanal 11 eingeschoben werden.

An der versorgungsseite des Elektromotors 1 ist ein Gehäuse- oder Statorflansch so konstruiert, dass ein Versorgungsschlauch über ein Stecksystem direkt an den Stator gekuppelt werden kann. Im Versorgungsschlauch können Kühlluft, Brauchwasser, Desinfektionsmittel und elektrische Energie geführt werden. Alle diese Medien werden durch das Statorpaket 3 dem Handstück bzw. Bohraufsatz zugeführt.

Erfindungsgemäß können am Außenumfang des Statorpakets 3 auch axial verlaufende Kanäle 11 durch Segmentplatten gebildet werden, die meanderförmige Kanalsysteme 25 begrenzen.

Fig. 14 zeigt einen eine Segmentplatte bildenden Einlegeteil 26, wie er erfindungsgemäß zum Ausgestalten bzw. zum Begrenzen von wenigstens einem Kanal 11,25 ausgebildet ist. In dieser Ausführungsform begrenzt der Einlegeteil 26 lediglich einen Kanal 25, welcher sich nicht direkt von einer Stirnseite des Einlegeteils 26 zur anderen erstreckt, sondern über mehrere Windungen gelenkt ist.

Der Kanal 25 mündet in dieser Fig. in zwei Öffnungen, die einen Einlass und einen Auslass bilden, wobei diese jeweils an den sich gegenüberliegenden Stirnseiten des Einlegeteils 26 angeordnet sind. Es ist ebenfalls möglich, dass Ein- und Auslass beide an der selben Stirnseite angeordnet sind.

Der Einlegeteil 26 kann so dimensioniert sein, dass er den Stator nur abschnittsweise umgibt, so dass wenigstens zwei Segmentplatten aufgebracht werden müssen, um den Stator um seinen Umfang zu umgeben. Es kann auch vorgesehen sein, dass ein Einlegeteil 26 in Form eines Ringes den Stator bereits vollständig umgibt.

Zusammenfassend kann ein Ausführungsbeispiel wie folgt beschrieben werden.

Ein Elektromotor 1 dient zum Antrieb von rotierenden Werkzeugen sehr kleiner Abmessungen für medizintechnischen Einsatz. Zum Schutz vor Chemikalien, Desinfektions- und/oder Sterilisationsprozessen ist der Elektromotor 1 samt Elektronikkomponenten 18 mit einer Beschichtung 10 aus speziellem, den Anforderungen entsprechendem Kunststoff, insbesondere duroplastischem Werkstoff, umhüllt. Trotz kleinem Bauvolumen erlaubt die Konstruktion, dass Leitungssysteme 11,22a,22b axial durch den Elektromotor 1 geführt werden und somit eine direkte Verbindung von einem Versorgungssystem zum Elektromotor 1 selbst bzw. Werkzeug und Arbeitsfeld des Anwenders besteht.

## Patentansprüche

1. Elektromotor, insbesondere Kleinst-Elektromotor (1), mit einer Rotoreinheit (2), einem Innenbereich (9) für die Rotoreinheit (2), einem die Rotoreinheit (2) umgebenden Statorpaket (3) mit einer aus Spulenelementen (8) gebildeten Statorwicklung, Elektronikkomponenten (18) zur Steuerung des Elektromotors (1) und einer wenigstens Teilbereiche des Elektromotors (1) umgebenen Beschichtung (10), die sich im Wesentlichen über die Länge des Elektromotors(1) erstreckt und wenigstens die Spulenelemente (8) und die Elektronikkomponenten (18) wenigstens teilweise sterilisationsfest umhüllt, **dadurch gekennzeichnet, dass** die mittels eines Spritzguss- oder Spritzpressverfahrens aufgebrachte Beschichtung (10) aus duroplastischem Werkstoff wenigstens einen integrierten Kanal (11), insbesondere für Fluide oder Gase, ausbildet, dass der Kanal (11) eine Verbindung zwischen den beiden Stirnseiten der Beschichtung (10) herstellt, und dass sich der Kanal (11) im Bereich des äußeren Durchmessers der Beschichtung (10) im Wesentlichen parallel zur Rotationsachse (12) des Elektromotors (1) erstreckt.

2. Elektromotor nach Anspruch 1, **dadurch gekennzeichnet, dass** die Beschichtung (10) eine im Wesentlichen kreiszylindermantelförmige Außenkontur aufweist.

3. Elektromotor nach Anspruch 1 oder 2, **dadurch gekennzeichnet, dass** die Beschichtung (10) die Rotoreinheit (2) wenigstens, teilweise umhüllt.

4. Elektromotor nach einem der Ansprüche 1 bis 3, **dadurch gekennzeichnet, dass** wenigstens ein Einlegeteil (26) vorgesehen ist, welcher wenigstens einen Kanal (11,25) begrenzt.

5. Elektromotor nach Anspruch 4, **dadurch gekennzeichnet, dass** der Einlegeteil (26) am Außenumfang des Statorpakets (3) anliegt, und dass die Beschichtung (10) den Einlegeteil (26) umhüllt.

6. Elektromotor nach Anspruch 4 oder 5, **dadurch gekennzeichnet, dass** der Einlegeteil (26) aus duroplastischem Werkstoff besteht.

7. Elektromotor nach einem der Absprüche 1 bis 6, **dadurch gekennzeichnet, dass** in der Beschichtung (10) Material für einen dynamischen Ausgleich der Rotoreinheit (2) aufgenommen ist.

8. Elektromotor nach einem der Ansprüche 1 bis 7, **dadurch gekennzeichnet, dass** in der Beschichtung (10) elektrische Leiter (22a,23) aufgenommen sind.

9. Elektromotor nach einem der Ansprüche 1 bis 8, **dadurch gekennzeichnet, dass** in der Beschichtung (10) Lichtleiter (22a) aufgenommen sind.

10. Elektromotor nach einem der Ansprüche 1 bis 9, **dadurch gekennzeichnet, dass** die Rotoreinheit (2) einseitig gelagert ist.

11. Elektromotor nach einem der Ansprüche 1 bis 9, **dadurch gekennzeichnet, dass** die Rotoreinheit (2) doppelseitig gelagert ist.

12. Elektromotor nach einem der Ansprüche 1 bis 12, **dadurch gekennzeichnet, dass** ein Kopplungsteil (14) an den Elektromotor (1) ansteckbar ist.

13. Verfahren zum Beschichten von Elektromotoren (1) mit einem Innenbereich (9) für eine Rotoreinheit (2), bei dem ein Statorpaket (3) mit einer durch Spulenelemente (8) gebildeten Statorwicklung wenigstens teilweise mit einer Beschichtung (10) umhüllt wird, die sich im Wesentlichen über die Länge des Elektromotors (1) erstreckt und die wenigstens bereichsweise um das Statorpaket (3) mit den Spulenelementen (8) und Elektronikkomponenten (18) zur Steuerung des Elektromotors (1) angebracht wird, **dadurch gekennzeichnet, dass** die Beschichtung (10) aus duroplastischem Werkstoff mit einem Spritzguss- oder Spritzpressverfahren aufgebracht wird, dass beim Spritzen der Beschichtung (10) in dieser wenigstens ein integrierter Kanal (11), insbesondere für Fluide oder Gase, ausgebildet wird, der sich im Bereich des äußeren Durchmessers der Beschichtung (10) im Wesentlichen parallel zur Rotationsachse des Elektromotors (1) erstreckt, und dass mit dem Kanal (11) eine Verbindung zwischen den beiden Stirnseiten der Beschichtung (10) hergestellt wird.

14. Verfahren nach Anspruch 13, **dadurch gekennzeichnet, dass** die Beschichtung (10) homogen aufgebracht wird.

15. verfahren nach Anspruch 13 oder 14, **dadurch gekennzeichnet, dass** das Beschichten des Statorpaketes (3) in einem Arbeitsgang mit dem Paketieren des Statorpaketes (3) ausgeführt wird.

16. Verfahren nach einem der Ansprüche 13 bis 15, **dadurch gekennzeichnet, dass** vor dem Umhüllen des Statorpaketes (3) mit den Spulenelementen (8) wenigstens ein Einlegeteil (26) am Außenumfang des Statorpaketes (3) aufgelegt wird.

17. Verfahren nach einem der Ansprüche 13 bis 16, **dadurch gekennzeichnet**, das der duroplastische Werkstoff im Temperaturbereich von 150 bis 200°C verarbeitet wird.

## Claims

1. An electric motor, particularly a miniature electric motor (1), with a rotor unit (2), an inner region (9) for the rotor unit (2), a stator pack (3) surrounding the rotor unit (2) with a stator winding formed from coil elements (8), electronic components (18) for controlling the electric motor (1) and a coating (10) surrounding at least part regions of the electric motor (1), which extends essentially over the length of the electric motor (1) and envelops at least the coil elements (8) and the electronic components (18) in an at least partially sterilisation-resistant manner, **characterised in that** the coating (10) applied by means of an injection-moulding or transfer-moulding method and made up of duroplastic material forms at least one integrated channel (11), particularly for fluids or gases, **in that** the channel (11) produces a connection between the two end faces of the coating (10), and **in that** the channel (11) extends in the region of the external diameter of the coating (10) essentially parallel to the axis of rotation (12) of the electric motor (1).

2. The electric motor according to Claim 1, **characterised in that** the coating (10) has an essentially cylindrical-case-shaped external contour.

3. The electric motor according to Claim 1 or 2, **characterised in that** the coating (10) envelops the rotor unit (2) at least partially.

4. The electric motor according to one of Claims 1 to 3, **characterised in that** at least one insert (26) is provided, which delimits at least one channel (11, 25).

5. The electric motor according to Claim 4, **characterised in that** the insert (26) bears against the external circumference of the stator pack (3) and **in that** the coating (10) envelops the insert (26).

6. The electric motor according to Claim 4 or 5, **characterised in that** the insert (26) consists of duroplastic material.

7. The electric motor according to one of Claims 1 to 6, **characterised in that** material for a dynamic balancing of the rotor unit (2) is accommodated in the coating (10).

8. The electric motor according to one of Claims 1 to 7, **characterised in that** electric conductors (22a, 23) are accommodated in the coating (10).

9. The electric motor according to one of Claims 1 to 8, **characterised in that** optical waveguides (22a) are accommodated in the coating (10).

10. The electric motor according to one of Claims 1 to 9, **characterised in that** the rotor unit (2) is mounted on one side.

11. The electric motor according to one of Claims 1 to 9, **characterised in that** the rotor unit (2) is mounted on two sides.

12. The electric motor according to one of Claims 1 to 12, **characterised in that** a coupling part (14) can be plugged onto the electric motor (1).

13. A method for coating electric motors (1) with an inner region (9) for a rotor unit (2), in which a stator pack (3) with a stator winding formed by coil elements (8) is enveloped at least partially with a coating (10) which extends essentially over the length of the electric motor (1) and which is applied at least in certain regions around the stator pack (3) with the coil elements (8) and electronic components (18) for controlling the electric motor (1), **characterised in that** the coating (10) made up of duroplastic material is applied with an injection-moulding or transfer-moulding method, **in that** when injecting the coating (10), at least one integrated channel (11), particularly for fluids or gases, is constructed in this coating (10), which channel extends in the region of the external diameter of the coating (10) essentially parallel to the axis of rotation of the electric motor (1), and **in that** a connection between the two end faces of the coating (10) is produced with the channel (11).

14. The method according to Claim 13, **characterised in that** the coating (10) is applied homogeneously.

15. The method according to Claim 13 or 14, **characterised in that** the coating of the stator pack (3) is executed in a work operation with the packing of the stator pack (3).

16. The method according to one of Claims 13 to 15, **characterised in that** at least one insert (26) is placed on the external circumference of the stator pack (3) before the enveloping of the stator pack (3) with the coil elements (8).

17. The method according to one of Claims 13 to 16, **characterised in that** the duroplastic material is processed in the temperature range from 150 to 200°C.

## Revendications

1. Moteur électrique, en particulier moteur électrique très petit (1), comprenant une unité de rotor (2), une zone intérieure (9) pour l'unité de rotor (2), un ensemble stator (3) entourant l'unité de rotor (2) avec un enroulement de stator formé d'éléments de bobine (8), des composants d'électronique (18) pour la commande du moteur électrique (1) et un revêtement (10) entourant au moins des zones partielles du moteur électrique (1), qui s'étend principalement sur la longueur du moteur électrique (1) et enveloppe au moins les éléments de bobine (8) et les composants d'électronique (18) de façon au moins partiellement résistante à la stérilisation, **caractérisé en ce que** le revêtement (10) appliqué au moyen d'un procédé de coulée ou de compression par injection à base de matériau duroplastique forme au moins un canal (11) intégré, en particulier pour des fluides ou des gaz, **en ce que** le canal (11) établit une liaison entre les deux côtés avant du revêtement (10), et **en ce que** le canal (11) s'étend dans la zone du diamètre extérieure du revêtement (10) principalement parallèlement à l'axe de rotation (12) du moteur électrique (1).

2. Moteur électrique selon la revendication 1, **caractérisé en ce que** le revêtement (10) présente un contour extérieur principalement en forme d'enveloppe cylindrique circulaire.

3. Moteur électrique selon la revendication 1 ou 2, **caractérisé en ce que** le revêtement (10) enveloppe au moins partiellement l'unité de rotor (2).

4. Moteur électrique selon l'une des revendications 1 à 3, **caractérisé en ce qu'**au moins une partie d'insertion (26) est prévue, laquelle délimite au moins un canal (11, 25).

5. Moteur électrique selon la revendication 4, **caractérisé en ce que** la partie d'insertion (26) s'applique sur le pourtour extérieur de l'ensemble stator (3), et **en ce que** le revêtement (10) enveloppe la partie d'insertion (26).

6. Moteur électrique selon la revendication 4 ou 5, **caractérisé en ce que** la partie d'insertion (26) est à base de matériau duroplastique.

7. Moteur électrique selon l'une des revendications 1 à 6, **caractérisé en ce que** du matériau pour un équilibre dynamique de l'unité de rotor (2) est logé dans le revêtement (10).

8. Moteur électrique selon l'une des revendications 1 à 7, **caractérisé en ce que** des conducteurs électriques (22a, 23) sont logés dans le revêtement (10).

9. Moteur électrique selon l'une des revendications 1 à 8, **caractérisé en ce que** des guides de lumière (22a) sont logés dans le revêtement (10).

10. Moteur électrique selon l'une des revendications 1 à 9, **caractérisé en ce que** l'unité de rotor (2) est montée sur un côté.

11. Moteur électrique selon l'une des revendications 1 à 9, **caractérisé en ce que** l'unité de rotor (2) est montée sur les deux côtés.

12. Moteur électrique selon l'une des revendications 1 à 12, **caractérisé en ce qu'**une partie d'accouplement (14) peut être montée par enfichage sur le moteur électrique (1).

13. Procédé pour le revêtement de moteurs électriques (1) avec une zone intérieure (9) pour une unité de rotor (2), dans lequel un ensemble stator (3) avec un enroulement de stator formé par des éléments de bobine (8) est enroulé au moins partiellement avec un revêtement (10), qui s'étend principalement sur la longueur du moteur électrique (1) et qui est placé au moins partiellement par endroits autour du paquet stator (3) avec les éléments de bobine (8) et composants d'électronique (18) pour la commande du moteur électrique (1), **caractérisé en ce que** le revêtement (10) à base de matériau duroplastique est appliqué avec un procédé de coulée par injection ou de compression par injection, **en ce que**, lors de l'injection du revêtement (10), au moins un canal intégré (11), en particulier pour des fluides ou des gaz, est conçu dans ce revêtement, lequel canal s'étend dans la zone du diamètre extérieur du revêtement (10) principalement parallèlement à l'axe de rotation du moteur électrique (1), et **en ce qu'**une liaison entre les deux côtés avant du revêtement (10) est établie avec le canal (11).

14. Procédé selon la revendication 13, **caractérisé en ce que** le revêtement (10) est appliqué de façon homogène.

15. Procédé selon la revendication 13 ou 14, **caractérisé en ce que** le revêtement de l'ensemble stator (3) est réalisé en une opération avec la mise en paquet de l'ensemble stator (3).

16. Procédé selon l'une des revendications 13 à 15, **caractérisé en ce que**, avant l'enveloppement de l'ensemble stator (3) avec les éléments de bobine (8), au moins une partie d'insertion (26) est posée sur le pourtour extérieur de l'ensemble stator (3).

17. Procédé selon l'une des revendications 13 à 16, **caractérisé en ce que** le matériau duroplastique est traité dans la plage de températures allant de 150 à 200°C.
